# EUROPEAN PATENT SPECIFICATION

(11) **EP 1 803 892 B1**
(45) Date of publication and mention of the grant of the patent: **15.02.2012**
(21) Application number: 06126612.8
(22) Date of filing: 20.12.2006
(51) Int. Cl.: E21B 7/20, F16L 1/028, H02G 1/06

(54) **Fast laying method for pipes/infrastructures/cables for underground services**
Schnellverlegeverfahren für Rohre/Infrastrukturen/Kabel für unterirdische Dienstleistungen
Procédé de déploiement rapide de tuyauterie/infrastructures/câblage pour services souterrains

(30) Priority: 27.12.2005 IT MI20052493
(43) Date of publication of application: 04.07.2007
(73) Proprietor: Beca Engineering S.r.l., 20129 Milano (IT)
(72) Inventor: Dugnani, Elisabetta, 20129 Milano (IT)
(74) Representative: Pesce, Michele

(56) References cited:
- EP-A- 0 955 444
- DE-A- 1 811 421
- US-A- 4 003 440

## Description

The present invention relates to a laying method for pipes/infrastructures/cables for underground services for telecommunications, energy and miscellaneous utilities.

Specific reference will be made hereinafter to a method (in accordance with "directional drilling" technology) for laying a pipe of diameter suitable for insertion through drilling rods, and intended for the most varied uses such as telecommunications cable laying, energy cable laying, semaphore cable laying, public lighting cable laying, or transport of water, gas or any element in liquid or gaseous form.

Pipes/infrastructures are currently laid using directional drilling by previously forming a pilot hole using a suitable drill carrying hollow rods (tubular sheaths) and having a drilling head fixed to their free end; drilling is achieved by rotationally forcing the drilling rods through the ground.

When the pilot hole has been made, the drilling head is removed and a reamer is mounted in its place and used to widen the pilot hole.

Backreaming is carried out by rotating and pulling the rods; during backreaming, the rods are pulled at the machine end and are continuously added at the reaming end, so that drilling rods are always present inside the pilot hole.

The pipe to form the infrastructure is then installed by coupling it to the reamer via an idle ball joint and rotating and pulling it together with the rods and reamer.

Hence in practice during pipe installation, the machine carries connected to it the rods carrying at their end the reaming head to which the pipes are connected on the opposite side to the rods.

However, this method presents numerous drawbacks and in particular the risk that when the pipes are pulled into the hole, they can break or undergo damage, with the need to carry out a new drilling.

The difficulty in pulling the pipes depends on the soil characteristics; in compact soil in which the reamer is able to form a proper underground passage, the soil does not oppose high resistance to pipe passage, whereas in friable or gravelly soil the soil opposes very high resistance to pipe passage.

A further drawback is the laying time and cost, which are both very high.

The technical aim of the present invention is therefore to provide a method by which the stated technical drawbacks of the known art are eliminated.

Within the scope of this technical aim an object of the invention is to provide a laying method for pipes/infrastructures/cables for underground services by which the risk of damaging or breaking the pipes/infrastructures/cables being installed is very limited.

Another object of the invention is to provide a method which enables underground pipes/infrastructures/cables to be installed in a very short time with very low cost.

The technical aim, together with these and other objects are attained according to the present invention by a laying method for pipes/infrastructures/cables for underground services in accordance with claim 1.

Advantageously the drilling machine can be of a power limited to that necessary for making the pilot hole alone (and not for pulling the pipes/infrastructures/cables).

Other characteristics of the present invention are defined in the subsequent claims.

Further characteristics and advantages of the present invention will be more apparent from the ensuing description of a preferred but non-exclusive embodiment of the laying method for pipes/infrastructures/cables for underground services according to the invention, illustrated by way of non-limiting example in the accompanying drawings, in which:

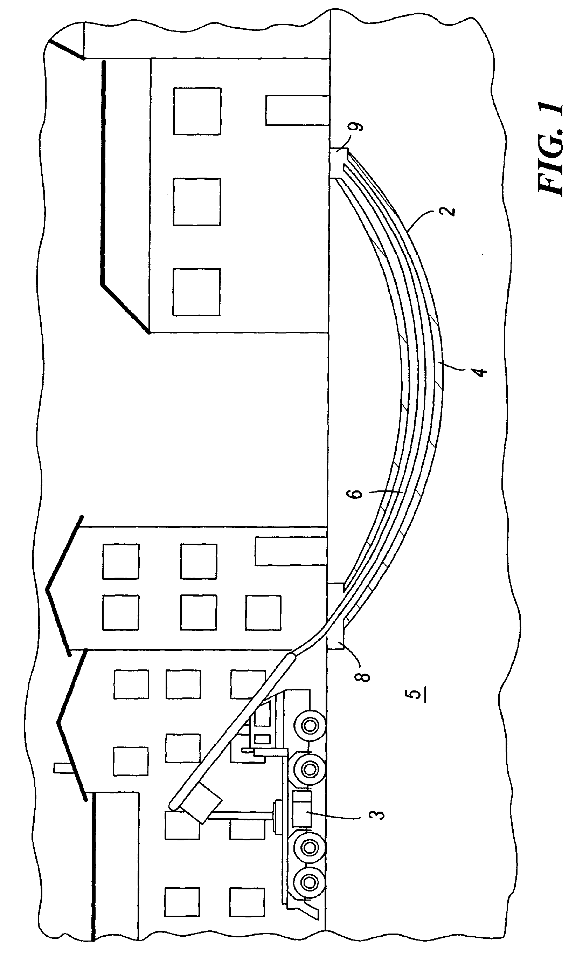

Figure 1 is a schematic view of a machine in the process of implementing a method according to the invention;

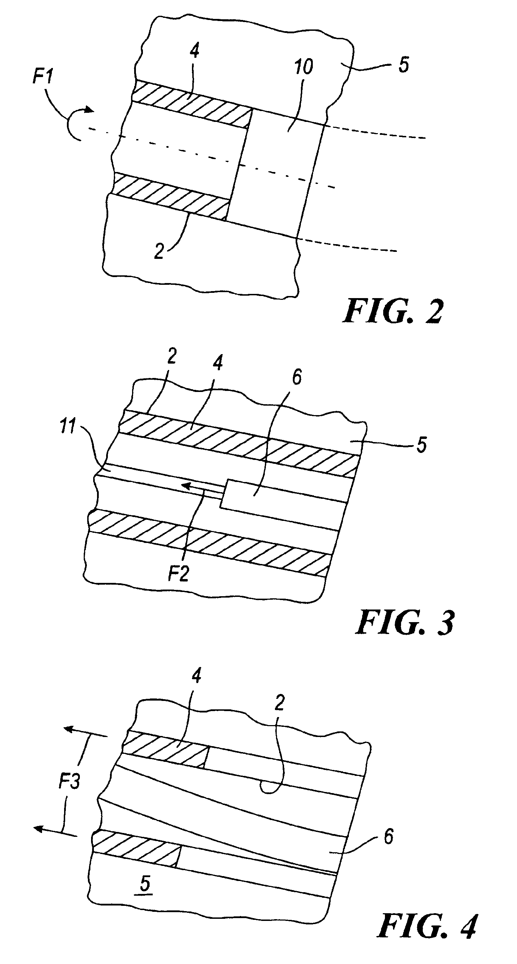

Figures 2-4 show a detail of the hole through which a pipe/infrastructure/cable is being inserted, in three different stages in the execution of the method.

With reference to the cited Figures, these show a laying method for pipes/infrastructures/cables for underground services.

The method consists of making a pilot hole 2 by means of a drilling machine 3 (of traditional type) provided with drilling rods 4 for transmitting roto-translational motion, as indicated by the arrow F1, to a drilling head 10 mounted at their end. Subsequently (i.e. when the pilot hole 2 has been completed) the pipe/infrastructure/cable 6 to be laid is inserted through the drilling rods 4 (as indicated by the arrow F2), and finally the drilling rods 4 are extracted (as indicated by the arrow F3). This is done without using a reamer for widening the pilot hole.

Specifically, the pipe/infrastructures/cable 6 is inserted through the rods 4 by previously inserting through said rods 4 a pull cord 11 by blowing with compressed air or any other method; the cord 11 is then fixed to the end of the cable 6 and pulled, to drag the pipe/infrastructure/cable 6 towards the opposite end to that through which it was inserted into the hole 2.

An entry hole 8 and an exit hole 9 are firstly made for the drilling head 10 located at the end of the drilling rods 4.

Advantageously, a reamer is not used to widen the pilot hole.

The pipe/infrastructure/cable to be laid has an outer diameter less than the inner diameter of the drilling rods and is intended for the most varied uses: such as telecommunications cable laying, energy cable laying, semaphore cable laying, public lighting cable laying, or transport of water, gas or any element in liquid or gaseous form.

The method is suitable in particular for laying a single pipe or new generation infrastructures for telecommunications, multiducts (usually called micro-tubes or mini-tubes or tubes or micro-ducts) consisting of an outer pipe with internal microducts dedicated to the laying of fibre optic micro-cables; for example a pipe with four internal microducts has an outer diameter of about 32mm, microducts of inner diameter from 8mm to 16mm being able to carry laid micro-cables with an outer diameter from 6mm to 10mm with a potentiality from 12 to 144 optical fibres.

The method conceived in this manner is susceptible to numerous modifications and variants, for example:
- pipes already carrying internal microducts (usually called micro-tubes or mini-tubes or tubes or micro-ducts) can be inserted for laying cables for telecommunications or other utilities,
- or any type of cable can be inserted through the rods,
- or alternative methods can be used for inserting the pull cord through the rods,
- or the pipe or cable can be inserted through the rods with the aid of pressurized water or compressed air to urge the pipe or cable through the rods as far as the opposite end,
- or when the rods are withdrawn rearwards towards the drilling machine while the pipe or cable remains in the ground, pressurized water or mixtures of water with any additive can be used to limit friction between the rods and pipe,
- or special rods constructed specifically for use with the method described herein having diameters different from those currently available commercially can be used,
- or instead of a single pipe, several pipes or any microduct or cables of any type and size can be inserted through the rods,
- or a micro-drilling machine can be constructed for inserting electrical or hydraulic installation pipes through building walls using the same method through the rods.

All these variants fall within the scope of the inventive concept; moreover all details can be replaced by technically equivalent elements.

In practice the materials used and the dimensions can be chosen at will according to requirements and to the state of the art.

## Claims

1. A laying method for pipes/infrastructures/cables (6) for underground services, **characterised by** consisting of forming a pilot hole (2) by means of a drilling machine (3) provided with drilling rods (4) able to excavate the soil, inserting through the drilling rods (4) at least one pipe/infrastructure/cable (6) to be laid, and finally extracting the drilling rods (4).

2. A method as claimed in claim 1, **characterised by** initially forming an entry and exit hole (8, 9) for a drilling head (10) positioned at the end of the drilling rods (4).

3. A method as claimed in one or more of the preceding claims, **characterised by** not using a reamer for widening the pilot hole (2).

## Patentansprüche

1. Verlegeverfahren für Rohre/Infrastrukturen/Kabel (6) für unterirdische Dienste, **dadurch gekennzeichnet, dass** es besteht aus einem Ausbilden eines Pilotlochs (2) mittels einer Bohrmaschine (3), welche mit Bohrstangen (4) versehen ist, welche in der Lage sind, das Erdreich auszugraben, ein Einführen von mindestens einem zu verlegenden Rohr/Infrastruktur/Kabel (6) durch die Bohrstangen (4), und schließlich ein Entnehmen der Bohrstangen (4).

2. Verfahren nach Anspruch 1, **gekennzeichnet durch** ein anfängliches Ausbilden eines Eingangs- und Ausgangslochs (8, 9) für einen Bohrkopf (10), welcher an dem Ende der Bohrstangen (4) angeordnet ist.

3. Verfahren nach einem oder mehreren der vorhergehenden Ansprüche, **gekennzeichnet durch** eine Nichtverwendung eines Bohrlochräumers zum Weiten des Pilotlochs (2).

## Revendications

1. Procédé de déploiement de tuyaux / infrastructures / câbles (6) pour des services souterrains, **caractérisé en ce qu'**il consiste à former un trou pilote (2) au moyen d'une machine de forage (3) équipée de tiges de forage (4) capables de creuser le sol, insérer à travers les tiges de forage (4) au moins un(e) tuyau / infrastructure / câble (6) qui doit être déployé(e), et finalement extraire les tiges de forage (4).

2. Procédé selon la revendication 1, **caractérisé par** l'étape consistant à former initialement un trou de sortie (8, 9) pour une tête de forage (10) positionnée à l'extrémité des tiges de forage (4).

3. Procédé selon une ou plusieurs des revendications précédentes, **caractérisé en ce qu'**il n'utilise pas de trépan aléseur pour élargir le trou pilote (2).
